Europäisches Patentamt

European Patent Office

Office européen des brevets

(11) Publication number: **0 495 456 A1**

# EUROPEAN PATENT APPLICATION

(21) Application number: **92100507.0**

(22) Date of filing: **14.01.92**

(51) Int. Cl.⁵: **C08L 27/12**, //(C08L27/12, 21:00)

(30) Priority: **16.01.91 JP 3139/91**

(43) Date of publication of application:
**22.07.92 Bulletin 92/30**

(84) Designated Contracting States:
**DE FR GB IT**

(71) Applicant: **DAIKIN INDUSTRIES, LIMITED**
**Umeda Center Building 4-12 Nakazaki-nishi**
**2-chome Kita-ku**
**Osaka 530(JP)**

(72) Inventor: **Tomoda, Masayasu, c/o Yodogawa**
**Works**
**Daikin Industries Ltd., 1-1, Nishihitotsuya**
**Settsu-shi, Osaka-fu(JP)**
Inventor: **Shirai, Yoshihiro, c/o Yodogawa**
**Works**
**Daikin Industries Ltd., 1-1, Nishihitotsuya**
**Settsu-shi, Osaka-fu(JP)**

(74) Representative: **Hansen, Bernd, Dr.rer.nat. et**
**al**
**Hoffmann, Eitle & Partner Patentanwälte**
**Arabellastrasse 4 Postfach 81 04 20**
**W-8000 München 81(DE)**

(54) **Fluororubber composition.**

(57) A fluororubber composition containing 100 parts by weight of a fluororubber and a 0.5 to 10 parts by weight of a liquid hydrocarbon rubber, which has good processability.

EP 0 495 456 A1

## BACKGROUND OF THE INVENTION

### Field of the Invention

The present invention relates to a fluororubber composition. More particularly, the present invention relates to a fluororubber composition comprising a fluororubber and a liquid hydrocarbon rubber and having improved processability.

### Description of the Related Art

When a fluororubber is roll kneaded together with other component such as a curing agent or when the fluororubber is kneaded by a screw in an extruder, low molecular weight components, which are contained due to a molecular weight distribution, tend to cause adhesion of the rubber composition to a surface of the roll or the screw. To improve the roll processability of the fluororubber, a wax or an aliphatic acid amide is added to the fluororubber as an improver of processability. However, when a molded article produced from such composition is contacted to a polar solvent such as methanol, the wax or the aliphatic acid amide is extracted with the solvent and causes problems.

## SUMMARY OF THE INVENTION

One object of the present invention is to provide a fluororubber composition which does not cause the adhesion of the composition to the roll or the extruder screw.

Another object of the present invention is to provide a fluororubber composition, from a molded article of which a component is not extracted with a solvent.

According to the present invention, there is provided a fluororubber composition comprising 100 parts by weight of a fluororubber and a 0.5 to 10 parts by weight of a liquid hydrocarbon rubber.

## DETAILED DESCRIPTION OF THE INVENTION

In the present invention, any one of conventional fluororubbers may be used. A typical example of the fluororubber is a copolymer of 40 to 85 % by mole of vinylidene fluoride and a rest of at least one other fluorine-containing ethylenically unsaturated monomer. Examples of the commercial available fluororubber are DAIEL (a trademark of Daikin Industries, Ltd.), VITON (a trademark of DuPont), Fluorel (a trademark of 3M), and the like.

The liquid hydrocarbon rubber to be added to the fluororubber is a hydrocarbon rubber which has a comparatively low molecular weight and is in the form of a viscous liquid at room temperature. Examples of the liquid hydrocarbon rubber are polyisoprene rubber, hydrogenated polyisoprene rubber, polybutadiene rubber, polychloroprene rubber, polybutene rubber, polyisobutylene rubber, nitrile rubber, and the like.

The liquid hydrocarbon rubber is used in an amount of 0.5 to 10 parts by weight, preferably 1 to 10 parts by weight per 100 parts by weight of the fluororubber.

The fluororubber composition can be cured by a per se conventional manner such as polyamide vulcanization using a polyamine, polyol vulcanization using a polyhydroxy compound and peroxide vulcanization using an organic peroxide.

## PREFERRED EMBODIMENTS OF THE INVENTION

The present invention will be illustrated by following Examples.

### Reference Example

### First polymerization step

In a 36.6 liter reaction vessel, pure water (15 liters) was charged and an internal atmosphere was thoroughly replaced with nitrogen gas. Then, a monomer mixture of vinylidene fluoride, hexafluoropropene and tetrafluoroethylene in a molar ratio of 46.5:37.0:16.5 (900 g) was supplied and heated up to 100°C while stirring. To the mixture in the vessel, ammonium persulfate (69 g) dissolved in pure water (360 ml) was added at a rate of 1.0 ml/min.

As the polymerization proceeded, the internal pressure dropped. Therefore, a monomer mixture of vinylidene fluoride, hexafluoropropene and tetrafluoroethylene in a molar ratio of 63.5:18.0:18.5 was supplied to continue the polymerization reaction with maintaining a reaction pressure at 10 kg/cm$^2$G. After 130 minutes, heating and stirring were terminated, and the remaining monomers were discharged to stop the reaction.

A concentration of a resulting aqueous emulsion was 25.2 % by weight. From a part of the emulsion, a terpolymer was recovered and its intrinsic viscosity [$\eta$] was measured to be 0.89.

Second polymerization step

The aqueous emulsion from the first polymerization step was treated with activated carbon to decompose remaining ammonium persulfate. The treated aqueous emulsion (0.2 liter) and pure water (0.8 liter) were charged in a 3 liter reaction vessel, and an internal atmosphere was thoroughly replaced with nitrogen gas. Then, a monomer mixture of vinylidene fluoride, hexafluoropropene and tetrafluoroethylene in a molar ratio of 46.5:37.0:16.5 (120 g) was charged and heated up to 70°C while stirring. Thereafter, diisopropyl peroxydicarbonate (3.0 g) was added under pressure of nitrogen gas to start polymerization.

As the polymerization proceeded, the internal pressure dropped. Therefore, a monomer mixture of vinylidene fluoride, hexafluoropropene and tetrafluoroethylene in a molar ratio of 63.5:18.0:18.5 was supplied to continue the polymerization reaction with maintaining a reaction pressure at 14 kg/cm$^2$G. After 60 minutes, heating and stirring were terminated, and the remaining monomers were discharged to stop the reaction.

A concentration of a resulting aqueous emulsion was 22.0 % by weight. From a part of the emulsion, a terpolymer was recovered and its intrinsic viscosity [$\eta$] was 0.95.

Examples 1-3 and Comparative Examples 1-3

Components shown the Table were kneaded on rolls and press cured at 160°C for 45 minutes. The rubber composition was not subjected to secondary curing.

Processability and physical properties of the cured rubber compositions are shown in the Table.

Table

| Example No. | 1 | 2 | 3 | C.1 | C.2 | C.3 |
|---|---|---|---|---|---|---|
| Composition (wt. parts) | | | | | | |
| Fluororubber (Reference Example) | 100 | 100 | 100 | 100 | 100 | 100 |
| MT carbon | 20 | 20 | 20 | 20 | 20 | 20 |
| Magnesium oxide (active) | 3 | 3 | 3 | 3 | 3 | 3 |
| Calcium hydroxide | 6 | 6 | 6 | 6 | 6 | 6 |
| Bisphenol AF | 2 | 2 | 2 | 2 | 2 | 2 |
| DBU salt | 0.5 | 0.5 | 0.5 | 0.5 | 0.5 | 0.5 |
| Banlube N-18F *1) | – | – | – | – | 1 | – |
| LIR-290 *2) | 2 | 5 | 10 | – | – | – |
| EP-43 *3) | – | – | – | – | – | 2 |
| Processability | | | | | | |
| Extrusion processability | | | | | | |
| Extrusion texture | O | O | O | O | O | O-Δ |
| Deposition on screw | O | O | O | X | O | Δ |
| Roll processability | O | O | O | Δ | O | Δ |
| Physical property | | | | | | |
| Tensile strength (kgf/cm$^2$) | 120 | 130 | 112 | 143 | 144 | 120 |
| Elongation (%) | 390 | 340 | 320 | 350 | 360 | 380 |
| Hardness (JIS-A) | 70 | 70 | 67 | 71 | 71 | 71 |
| Compression set (%) | 35 | 30 | 32 | 36 | 38 | 41 |
| Methanol resistance (%) | 31 | 31 | 32 | 31 | 33 *4) | 31 |

Notes: *1) N,N'-Ethylenebisstearoamide (manufactured by Harima Chemical).

*2) Hydrogenated liquid polyisoprene rubber having an average molecular weight of 25,000 (manufactured by Kuraray).

*3) An ethylene-propylene rubber (iodine value of 6) manufactured by Nippon Synthetic Rubber).

*4) Precipitated materials were formed when the extracted liquid was cooled.

Measuring methods

Extrusion processability

EP 0 495 456 A1

A 50 mm single-screw extruder (L/D = 10) (manufactured by Kabushikikaisha Sanyo Seisakusho) was used. A die temperature: 100°C, a cylinder temperature: 90°C, A screw speed: 20 rpm.

Extrusion texture

    O:    Good
    △:    Fair
    X:    Pad.

Deposition on screw

After stopping the supply of the rubber composition and no rubber being exited from the die, the screw was stopped and removed from the extruder cylinder. Then, the deposition state of the rubber on the screw was observed.
    O:    No deposit
    △:    A few deposits
    X:    Many deposits
The physical properties of the cured rubber composition were measured under following conditions:
Compression set: 120°C x 72 hours.

Methanol resistance:

A piece of the cured rubber composition was dipped in a mixture of Fuel C (toluene/isooctane: 50/50 by volume) and methanol in a volume ratio of 30:70 at 50°C for 72 hours and the increase of a volume of the rubber piece was measured.

Roll processability:

The adhesion to the rolls, separation, powder addition time and milling texture were totally observed and evaluated according to the following criteria:
    O:    Good
    △:    Fair
    X:    Poor

**Claims**

1. A fluororubber composition comprising 100 parts by weight of a fluororubber and a 0.5 to 10 parts by weight of a liquid hydrocarbon rubber.

2. The fluororubber composition according to claim 1, wherein said liquid hydrocarbon rubber is a liquid polyisoprene rubber or a liquid hydrogenated polyisoprene rubber.

3. The fluororubber composition according to claim 1, wherein said fluororubber is a copolymer of 40 to 85 % by mole of vinylidene fluoride and a rest of at least one other flourine-containing ethylenically unsaturated monomer.

4. The fluororubber composition according to claim 1, wherein an amount of said liquid hydrocarbon rubber is from 1 to 10 parts by weight per 100 parts by weight of said fluororubber.

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 249 118 (TRW INC.)<br>* page 3, line 36 - page 4, line 4 *<br>* page 4, line 31 - line 36 *<br>* claims 1,2 *<br>--- | 1 | C08L27/12<br>//(C08L27/12,<br>21:00) |
| A | EP-A-0 132 834 (DAIKIN IND.)<br>* abstract *<br>* page 8, table 1, comparative  example 2 *<br><br>----- | 1 | |

TECHNICAL FIELDS
SEARCHED (Int. Cl.5)

C08L

The present search report has been drawn up for all claims

| Place of search | Date of completion of the search | Examiner |
|---|---|---|
| THE HAGUE | 23 APRIL 1992 | METTLER R.M. |

EPO FORM 1503 03.82 (P0401)